# EUROPEAN PATENT APPLICATION

(11) **EP 4 255 104 A2**
(43) Date of publication of application: **04.10.2023**
(21) Application number: 23192092.7
(22) Date of filing: 19.11.2019
(51) Int. Cl.: H04W 88/08

(54) **COMMUNICATION SYSTEM AND COMMUNICATION TERMINAL DEVICE**

(30) Priority: 26.11.2018 JP 2018220149
(62) Divisional of application: 19889694.6
(71) Applicant: MITSUBISHI ELECTRIC CORPORATION, Chiyoda-ku Tokyo 100-8310 (JP)
(72) Inventor: HIRAMATSU, Daisuke, Tokyo, 100-8310 (JP); SHIMODA, Tadahiro, Tokyo, 100-8310 (JP)
(74) Representative: Meissner Bolte Partnerschaft mbB

(57) **Abstract**

A communication terminal apparatus (202) communicating with a base station apparatus (203) is disclosed, the communication terminal apparatus (202) configured to: receive a threshold transmitted from the base station apparatus (203) via a RRC connection release message; measure Reference Signal Received Powers (RSRPs) for one or more neighbouring cells; and perform cell reselection based on the measured RSRPs and the threshold.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

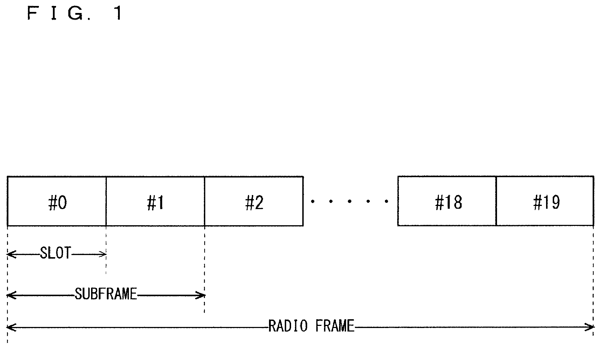

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the LTE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 v15.2.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. For example, aggregation of controllers of base stations by split of central units (CUs) and distributed units (DUs) or the like has been studied (see Non-Patent Document 20).

In a system of such a CU-DU split configuration, base station functions are split into two, namely RRC/PDCP being a higher layer and RLC/MAC/PHY being a lower layer. Stations having the functions are referred to as CUs and DUs, respectively. A plurality of DUs may be accommodated under one common CU.

### Prior Art Documents

### Non-Patent Documents

Non-Patent Document 1: 3GPP TS 36.300 V15.2.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V14.1.0
Non-Patent Document 11: 3GPP RP-172115
Non-Patent Document 12: 3GPP TS 37.340 V15.2.0
Non-Patent Document 13: 3GPP TS 38.211 V15.2.0
Non-Patent Document 14: 3GPP TS 38.213 V15.2.0
Non-Patent Document 15: 3GPP TS 38.214 V15.2.0
Non-Patent Document 16: 3GPP TS 38.300 V15.2.0
Non-Patent Document 17: 3GPP TS 38.321 V15.2.0
Non-Patent Document 18: 3GPP TS 38.212 V15.2.0
Non-Patent Document 19: 3GPP RP-161266
Non-Patent Document 20: 3GPP TS 38.401 V15.2.0
Non-Patent Document 21: 3GPP TS 38.304 V15.0.0

### Summary

### Problem to be Solved by the Invention

When the UE performs cell reselection (see Non-Patent Document 21), if the UE selects the DU under the CU that is the same as the CU to which the UE has been connected in the immediately preceding case, signaling between the CUs is unnecessary. In contrast, if the UE selects the DU under the CU that is different from the CU to which the UE has been connected in the immediately preceding case, signaling is necessary between the CU of the immediately preceding connection target and the CU of a new connection target. Therefore, from the point of view of processing delay, it is preferable to select the DU under the CU that is the same as the CU that has been connected in the immediately preceding case.

Depending on received power strength from neighboring DUs, the UE may select the DU under the same CU, or may select the DU under a different CU. Even the DU under the same CU is present sufficiently near the UE, the DU under a different CU may be selected. In this case, a problem of a delay in the cell reselection processing is caused.

In the light of the problem described above, the present invention has an object to provide a radio communication technology with low delay in NR.

### Means to Solve the Problem

According to the present invention, a communication system is provided. The communication system includes: a plurality of base stations; and a communication terminal device configured to perform radio communication with the plurality of base stations. Each of the plurality of base stations includes a plurality of distributed units (DUs) configured to perform radio communication with the communication terminal device, and a central unit (CU) configured to control the plurality of DUs. When the communication terminal device selects a connection target DU, the communication terminal device preferentially selects one of the plurality of DUs belonging to an immediately preceding CU being the CU to which another of the plurality of DUs having been connected in an immediately preceding case belongs over yet another of the plurality of DUs belonging to another CU.

Further, according to the present invention, a communication system is provided. The communication system includes: a plurality of base stations; and a communication terminal device configured to perform radio communication with the plurality of base stations. When the communication terminal device selects a connection target base station, the communication terminal device preferentially selects one of the plurality of base stations belonging to an immediately preceding RAN-based notification area (RNA) being the RNA to which another of the plurality of base stations having been connected in an immediately preceding case belongs over yet another of the plurality of base stations belonging to another RNA.

Further, according to the present invention, a communication terminal device configured to perform radio communication with a plurality of base stations is provided. Each of the plurality of base stations includes a plurality of distributed units (DUs) configured to perform radio communication with the communication terminal device, and a central unit (CU) configured to control the plurality of DUs. When the communication terminal device selects a connection target DU, the communication terminal device preferentially selects one of the plurality of DUs belonging to an immediately preceding CU being the CU to which another of the plurality of DUs having been connected in an immediately preceding case belongs over yet another of the plurality of DUs belonging to another CU.

Further, according to the present invention, a communication terminal device configured to perform radio communication with a plurality of base stations is provided. When the communication terminal device selects a connection target base station, the communication terminal device preferentially selects one of the plurality of base stations belonging to an immediately preceding RAN-based notification area (RNA) being the RNA to which another of the plurality of base stations having been connected in an immediately preceding case belongs over yet another of the plurality of base stations belonging to another RNA.

### Effects of the Invention

According to the present invention, in NR, radio communication with low delay can be performed.

The objects, features, aspects, and advantages of the present invention become more apparent from the following detailed description of the present invention when taken in conjunction with the accompanying drawings.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: is a diagram illustrating an example of a configuration of CU-DU split in an NR base station.
- FIG. 15: is a diagram illustrating an example of operation in which the UE performs cell reselection between DUs under the same CU in a system of a CU-DU split configuration according to the first embodiment.
- FIG. 16: is a block diagram illustrating an example of processing of preferentially selecting a DU under the same CU over a DU under a different CU by using an offset value A according to the first embodiment.
- FIG. 17: is a block diagram illustrating an example of processing of preferentially selecting a DU under the same CU over a DU under a different CU by using a threshold B according to the second embodiment (in a case of the same CU and where there is P(x) that satisfies P(x) > B).
- FIG. 18: is a block diagram illustrating an example of processing of preferentially selecting a DU under the same CU over a DU under a different CU by using a threshold B according to the second embodiment (in a case of the same CU and where there is no P(x) that satisfies P(x) > B).
- FIG. 19: is a diagram illustrating an example of operation in which the UE performs cell reselection between the base stations in the same RNA according to the third embodiment.

### Description of Embodiments

### The First Embodiment

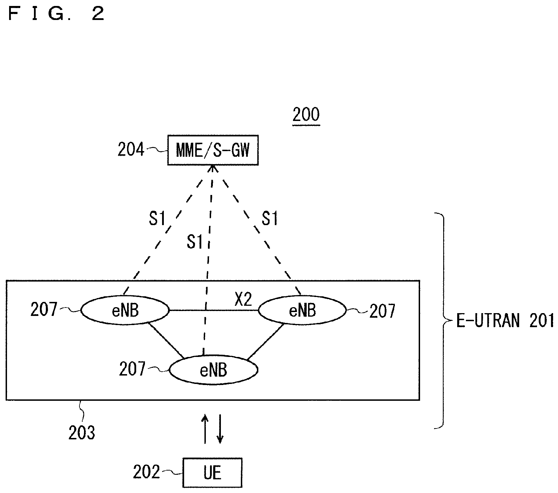

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (LTE)") 202 that is a communication terminal device is capable of radio communication with a base station device (hereinafter, referred to as a "base station (E UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC _CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (LTE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

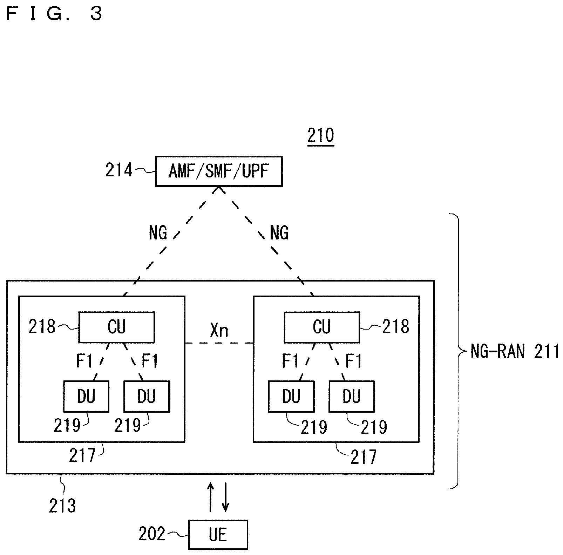

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NG-RAN NodeB (gNB)") 213, and transmits and receives signals to and from the NR base station device 213 via radio communication. Furthermore, the core network is referred to as a 5G Core (5GC).

When control protocols for the LTE 212, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214.

The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

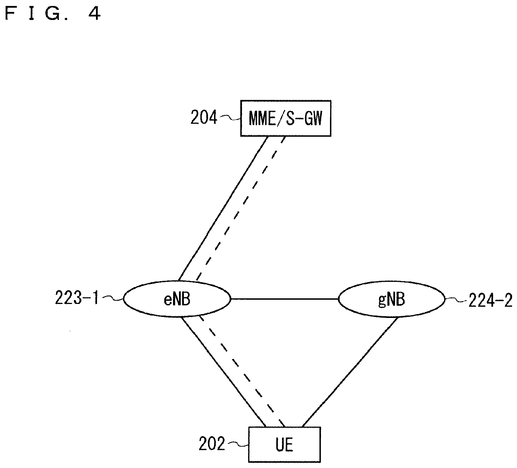

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

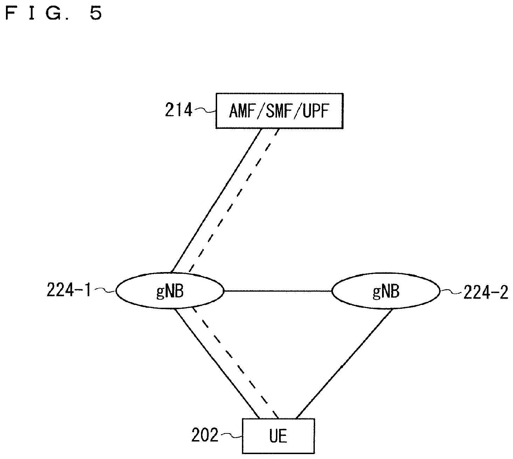

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

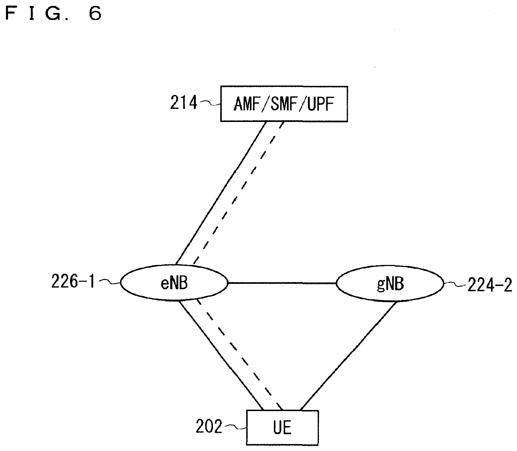

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

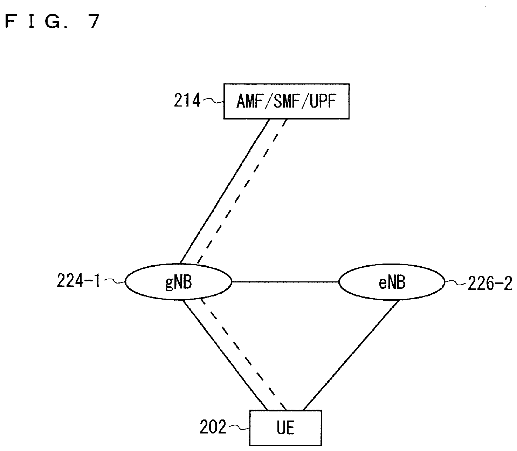

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

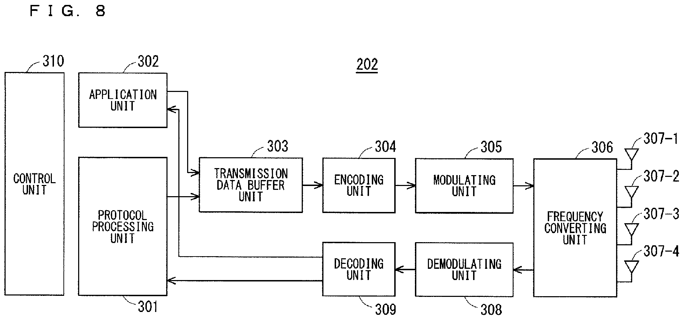

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

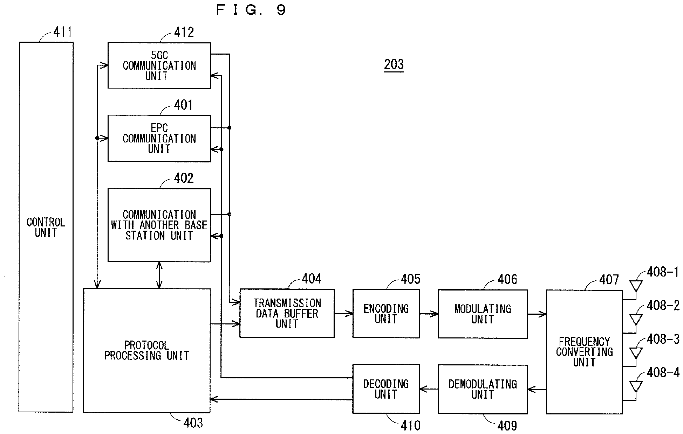

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station.

The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406.

The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401 and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

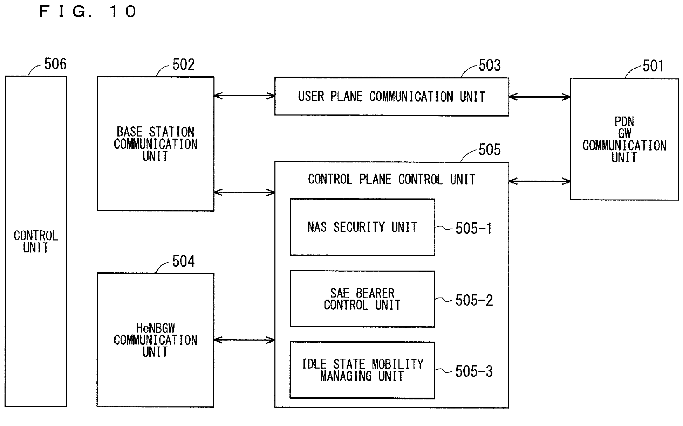

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility management unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer.

The idle state mobility management unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility management unit 505-3 may manage the CSG of the eNBs 207 to be connected to the MME 204a, CSG IDs, and a whitelist.

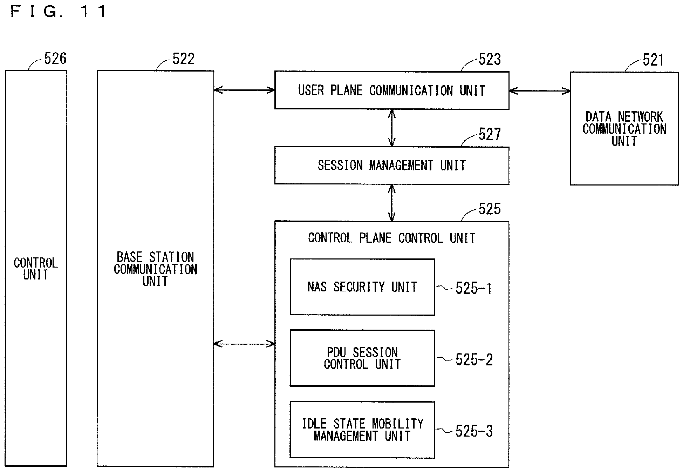

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data through the user plane communication unit 523 to a session management unit 527. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility management unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214.

The idle state mobility management unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

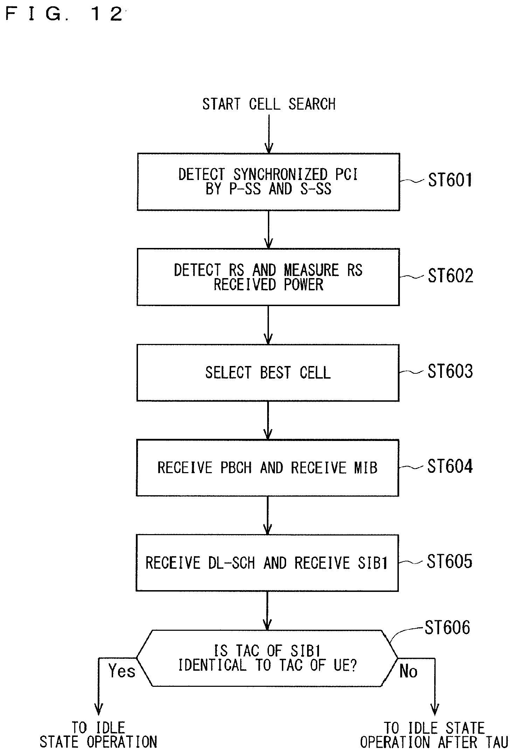

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

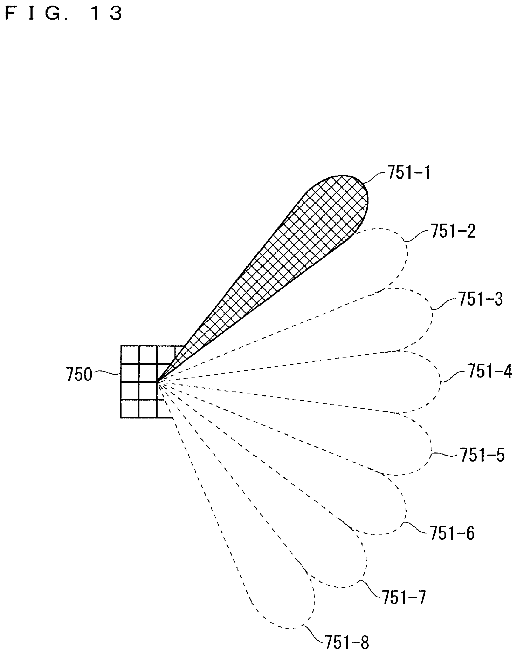

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In NR, a configuration of CU-DU split has been studied. Handover between the DUs in the configuration of CU-DU split, specifically a change of a connection target DU when the UE is in a state of RRC_CONNECTED, has been discussed.

To the CU in the NR base station, one DU may be connected, or a plurality of DUs may be connected. Further, the CU in NR may be provided for each of the control plane and the user plane. The same may hold true for the DU.

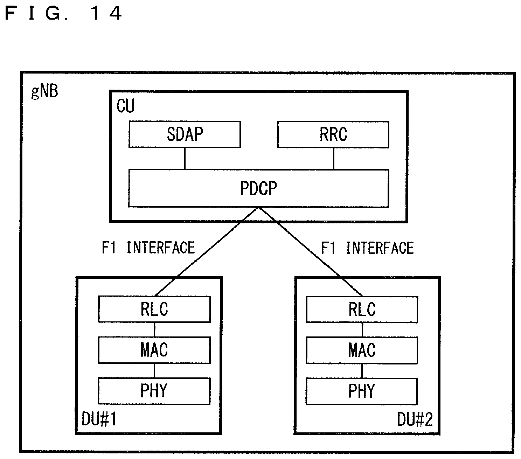

FIG. 14 is a diagram illustrating an example of the configuration of CU-DU split in the NR base station. FIG. 14 illustrates an example in which one CU is provided and two DUs are connected to the one CU. In the example illustrated in FIG. 14, the CU has each function of the RRC layer, the SDAP layer, and the PDCP layer, and the DU has each function of the RLC layer, the MAC layer, and the PHY layer.

The functions of the CU and the DU in FIG. 14 are not limited to the example described above. For example, the CU may have each function of the RRC layer, the SDAP layer, the PDCP layer, the RLC layer, and the MAC layer and a part of the function of the PHY layer, and the DU may have the rest of the function of the PHY layer.

Even when the LTE is in the state of RRC_INACTIVE or RRC_IDLE, the UE may perform cell reselection between the DUs.

When the UE performs cell reselection, the UE selects a connection target DU by using received power strength from neighboring DUs as a criterion for determination.

If the UE selects the DU under the CU that is the same as the CU to which the UE has been connected in the immediately preceding case, signaling between the CUs is unnecessary. In contrast, if the UE selects the DU under the CU that is different from the CU to which the UE has been connected in the immediately preceding case, signaling is necessary between the CU of the immediately preceding connection target and the CU of a new connection target. Therefore, from the point of view of processing delay, it is preferable to select the DU under the CU that is the same as the CU that has been connected in the immediately preceding case.

Depending on received power strength from neighboring DUs, the UE may select the DU under the same CU, or may select the DU under a different CU. Even the DU under the same CU is present sufficiently near the UE, the DU under a different CU may be selected. In this case, cell reselection processing is delayed, which causes a problem that the LTE cannot be promptly restored from the state of RRC_INACTIVE or RRC IDLE to the state of RRC_CONNECTED.

A solution to the problem described above is disclosed below.

When the UE performs cell reselection, the UE determines to which CU each neighboring DU belongs, and preferentially selects the DU under the CU that is the same as the CU to which the UE has been connected in the immediately preceding case over the DU under the CU that is different from the CU to which the UE has been connected in the immediately preceding case.

The problem and the solution described above will be described by taking an example.

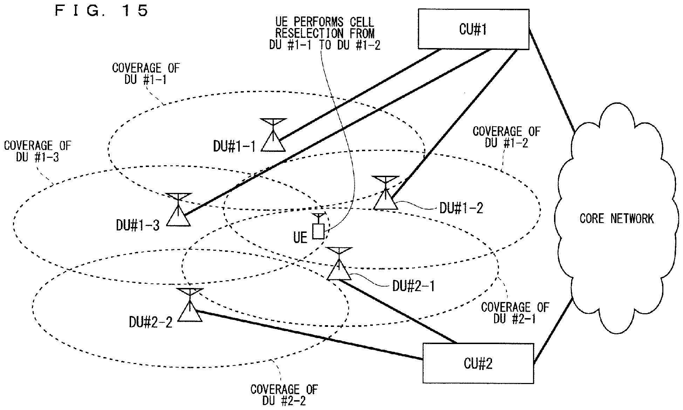

FIG. 15 is a diagram illustrating an example of operation in which the UE performs cell reselection between the DUs under the same CU in a system of the CU-DU split configuration.

According to the example of FIG. 15, DU #1-1, DU #1-2, and DU #1-3 are present under CU #1. DU #2-1 and DU #2-2 are present under CU #2. The UE is in the state of RRC_INACTIVE after being connected to DU #1-1, and subsequently intends to be restored to the state of RRC_CONNECTED by performing cell reselection. The position of the UE in this case is located outside the coverage of DU #1-1, and is located inside the coverage of DU #1-2 and inside the coverage of DU #2-1.

Under such circumstances, if the UE selects DU #1-2 as the connection target, the CU of the connection target remains being CU #1 and there is no change, and thus signaling between the CUs is unnecessary.

However, if the UE selects DU #2-1 as the connection target, the CU of the connection target is changed from CU #1 to CU #2, and thus signaling is necessary between CU #1 CU #2.

CU #1 and CU #2 perform the signaling via a core network, and thus there is as much delay in restoration of the LTE from the state of RRC_INACTIVE to the state of RRC_CONNECTED as processing delay in the signaling.

From the point of view of processing delay, it is desirable that the UE preferentially select DU #1-2 over DU #2-1 as the connection target.

The following will describe a means in which the LTE determines to which CU each neighboring DU belongs.

An ID enabling unique identification of the CU is included in broadcast information transmitted by the DU as one information element. Each DU includes the ID of the CU to which the DU belongs in the broadcast information so as to transmit the ID. By acquiring the broadcast information in advance, the LTE can determine to which CU the DU belongs.

The ID of each CU is defined as a system so as to enable unique identification of all of the CUs in the system.

As another example of a means in which the UE determines to which CU each neighboring DU belongs, a means described below may be applied.

A list of cell IDs of all of the DUs under the same CU is included in broadcast information transmitted by the DU as one information element. Each DU includes the cell IDs of all of the DUs under the CU to which the DU belongs in the broadcast information so as to transmit the cell IDs. By acquiring the broadcast information in advance, the UE can determine which DUs belong to the same CU.

As another example, a list of identifiers (for example, DU-ID) of all of the DUs under the same CU is included in broadcast information transmitted by the DU as one information element. Each DU includes the identifiers of all of the DUs under the CU to which the DU belongs in the broadcast information so as to transmit the identifiers. With this, for example, effects similar to those described above can be obtained.

As another example, the DU may individually report information related to the DU under the same CU to the UE. The individually reported information may be similar to the information included in the broadcast information transmitted by the DU, which is disclosed in the description above. For the individual reporting, for example, RRC signaling may be used. As the RRC signaling, for example, RRC signaling (for example, RRC connection release (RRCConnectionRelase)) that is used by the base station for the UE in giving a command of transition to the RRC_INACTIVE state or the RRC_IDLE state may be used. With this, for example, the signaling amount of the broadcast information transmitted from the DU to the UE under the DU can be reduced.

The UE may retain the information described above. Operation of the retaining may be, for example, performed in a state in which the UE is transitioned to the RRC_INACTIVE state and/or the RRC_IDLE state. With this, for example, even when the UE is in the RRC_INACTIVE state or the RRC_IDLE state, the UE can know the CU to which a preferentially selected DU is connected.

The following will describe a means in which the UE preferentially selects the DU under the same CU over the DU under a different CU when the LTE performs cell reselection.

When the UE compares received power from neighboring DUs, the UE adds a predetermined offset value A to the received power to the DU under the same CU and then performs the comparison. The addition of the offset value A described above, for example, may be performed using a decibel value, or may be performed using a true value.

For example, assume that the received power of DU #1-1 and DU #1-2 under the same CU is respectively P11 and P12, and the received power of DU #2-1 under a different CU is P21. In this case, the determination of a cell reselection target of the UE is performed through comparison of three values, namely P11+A, P12+A, and P21.

The offset value A is a parameter for determining priority when the DU under the same CU is preferentially selected over the DU under a different CU. If the value of A is 0, the DU under the same CU and the DU under a different CU are equally compared without priority. A larger value of A means higher priority, which leads to preferential selection of the DU under the same CU.

As another example, when the LTE compares received power from neighboring DUs, the LTE may subtract the predetermined offset value A from the received power of the DU not under the same CU and then perform the comparison. For example, this enables comparison between values with a small number of digits. As a result, the use memory amount of the UE can be reduced. The subtraction of the offset value A described above, for example, may be performed using a decibel value.

For example, assume that the received power of DU #1-1 and DU #1-2 under the same CU is respectively P11 and P12, and the received power of DU #2-1 under a different CU is P21. In this case, the determination of a cell reselection target of the UE may be performed through comparison of three values, namely P11, P12, and P21-A.

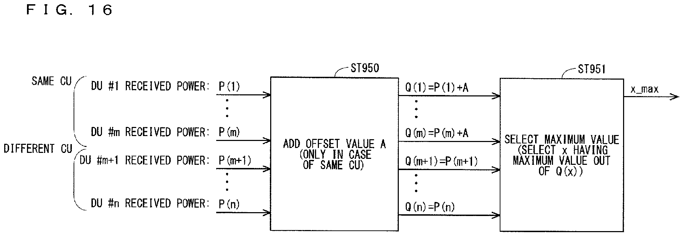

FIG. 16 is a block diagram illustrating an example of processing preferentially selecting the DU under the same CU over the DU under a different CU by using the offset value A described above. FIG. 16 illustrates an example of adding the offset value A described above to the DU under the same CU. The processing of the block diagram is applied to Step ST603 of SELECT BEST CELL in the flowchart of cell search described with reference to FIG. 12 in the above.

The following assumes a case in which the UE has measured received powers from DU #1 to DU #m under the same CU and DU #m+1 to DU #n under a different CU, and each of those received powers is P(x). Here, x is a number of the DU, and is an integer that satisfies 1 ≤ x ≤ n.

In block ST950, processing of adding the offset value A is performed on these received powers P(x). Note that the offset value A is added to the received powers P(1) to P(m) of the DUs under the same CU, whereas the offset value A is not added to the received powers P(m+1) to P(n) of the DUs under a different CU.

In block ST951, processing of selecting a maximum value is performed on result values Q(x) (specifically, Q(1) to Q(n)) obtained by the addition processing of the offset value A. Specifically, x having a maximum value of Q(x) out of the input values Q(x) to block ST951 is selected. Selected x is used as a processing result x_max of maximum value selection.

The DU represented by the processing result x_max of maximum value selection is determined as the cell reselection target.

The following will describe a means in which the UE determines the offset value A.

The offset value A is a fixed value that is uniquely determined in advance in the system, and is a value known to the UE.

Alternatively, the offset value A may be included in broadcast information transmitted by the base station as one information element, and the UE may acquire the broadcast information in advance.

Alternatively, the offset value A may be included in any of RRC signaling, MAC signaling, and L1/L2 signaling as one information element, and the offset value A may be individually reported from the base station to the UE. Alternatively, the offset value A may be reported from the base station to the LTE by combining two or more out of the signaling and the broadcast information described above. With this, for example, the base station can flexibly change the offset value A.

The RRC signaling used in the description above may be, for example, RRC signaling that is used by the base station for the UE in giving a command of transition to RRC _INACTIVE or RRC_IDLE. With this, for example, the base station can report the offset value A to the UE by performing flexible control for each of such commands of transition.

The following will describe an example of reporting the offset value A from the base station to the LTE by combining two or more out of the signaling and the broadcast information described above. For example, candidates of the offset value A may be broadcast from the base station to the LTE by using the broadcast information, and information indicating which value of the candidates is to be used may be reported from the base station to the LTE by using RRC signaling, MAC signaling, or L1/L2 signaling. With this, for example, the signaling amount when the offset value A is reported from the base station to the UE can be reduced.

As another example, a plurality of candidates of the offset value A may be determined in a specification in advance. The base station may broadcast, to the UE, information indicating which value of the candidates is to be used by using the broadcast information. Alternatively, the base station may report the information indicating which value of the candidates is to be used to the UE by using RRC signaling, MAC signaling, or L1/L2 signaling. With this, the signaling amount when the offset value A is reported from the base station to the UE can further be reduced.

In the first embodiment, cell reselection using the offset value and cell reselection not using the offset value may be present. For example, the offset value may not be provided in cell reselection in a case of initial access, and the offset value may be provided in cell reselection after transition from RRC _CONNECTED to RRC INACTIVE or RRC IDLE.

With this, for example, the UE can perform cell reselection to the DU having satisfactory communication quality regardless of the CU connected by the DU first selected in cell selection in a case of initial access. As a result, communication quality of the UE can be enhanced.

As another example, the offset value may not be provided in cell reselection in a case of RRC_IDLE, and the offset value may be provided in cell reselection in a case of RRC_INACTIVE. With this, for example, in the RRC_INACTIVE state, signaling between the base stations after cell reselection can be reduced, and in the RRC_IDLE state, the UE can connect to the DU having high communication quality. As a result, quality of the communication system can be enhanced.

In the first embodiment, a plurality of offset values may be provided in cell reselection. For example, the offset value in the RRC _INACTIVE state may be different from the offset value in the RRC_IDLE state. With this, for example, flexibility of the communication system can be enhanced.

According to the first embodiment, when the LTE performs cell reselection, there is a higher probability that the UE selects the DU under the CU that is the same as the CU to which the UE has been connected in the immediately preceding case. Accordingly, when the LTE selects the DU under the CU that is the same as the CU to which the UE has been connected in the immediately preceding case, signaling between the CUs is unnecessary. In this case, the LTE can be promptly restored from the state of RRC INACTIVE or RRC IDLE to the state of RRC_CONNECTED. As a result, in NR, radio communication with low delay can be performed.

Here, according to the first embodiment, for example, a configuration as below is provided.

A communication terminal device configured to perform radio communication with a plurality of base stations is provided. Further, a communication system including such a communication terminal device and a plurality of base stations is provided.

Specifically, each of the plurality of base stations includes a plurality of DUs configured to perform radio communication with the communication terminal device, and a CU configured to control the plurality of DUs. When the communication terminal device selects a connection target DU, the communication terminal device preferentially selects the DU belonging to an immediately preceding CU (the CU to which the DU that has been connected in an immediately preceding case belongs) over the DU belonging to another CU.

The communication terminal device and the communication system described above may have a more specific configuration as below, for example. Specifically, when the communication terminal device selects the connection target DU, the communication terminal device performs received power comparison processing of comparing received power values from neighboring DUs. The received power comparison processing includes offset processing.

The offset processing is processing of adding an offset value to the received power value of the neighboring DU belonging to the immediately preceding CU and not adding the offset value to the received power value of the neighboring DU belonging to the another CU. The communication terminal device compares the received power values after the offset processing in the received power comparison processing.

The configurations described above can be modified in various forms, based on disclosure and implication of this specification including the first embodiment. According to the configurations described above and modifications of the configurations, the problem described above can be solved, with the result that the effects described above can be obtained.

### Second Embodiment

The second embodiment will describe another means in which the UE preferentially selects the DU under the same CU over the DU under a different CU when the LTE performs cell reselection.

In the first embodiment, when the LTE compares the received power from neighboring DUs, regarding all of the neighboring DUs, the UE determines which DU has maximum received power. In contrast, in the second embodiment, when the UE compares the received power of the DUs, regarding all of the DUs under the same CU, the UE compares the received power of the DU with a predetermined threshold B so as to narrow down cell reselection target candidates.

When there are DUs having received power of the threshold B or greater, the LTE regards only such DUs, specifically the DUs having received power of the threshold B or greater, as the cell reselection target candidates, and then determines which DU has maximum received power.

When there are no DUs having received power of the threshold B or greater, the UE regards all of the neighboring DUs as the cell reselection target candidates, and then determines which DU has maximum received power.

For example, assume that the received power of DU #1-1, DU #1-2, and DU #1-3 under the same CU is respectively P11, P12, and P13, and the received power of DU #2-1 and DU #2-2 under a different CU is respectively P21 and P22. In this case, if P11 < B, P12 > B, and P13 > B, the cell reselection target candidates are narrowed down only to DU #1-2 and DU #1-3. Specifically, regardless of the values of P21 and P22, DU #2-1 and DU #2-2 are excluded from the cell reselection target candidates.

The threshold B is a parameter for determining priority when the DU under the same CU is preferentially selected over the DU under a different CU. If the value of B is sufficiently large, the DU under the same CU and the DU under a different CU are equally compared without priority. A smaller value of B means higher priority, which leads to preferential selection of the DU under the same CU.

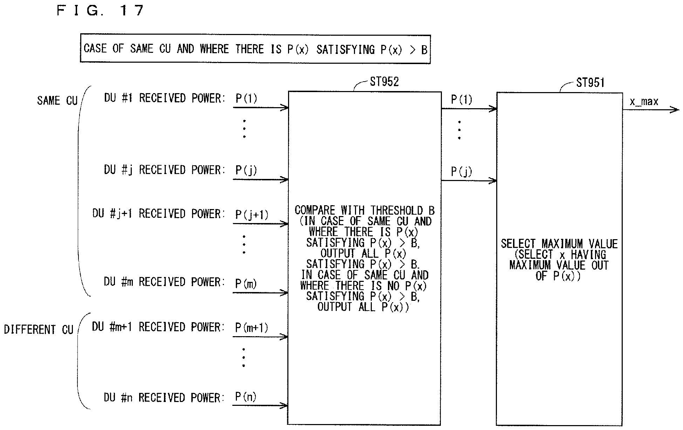

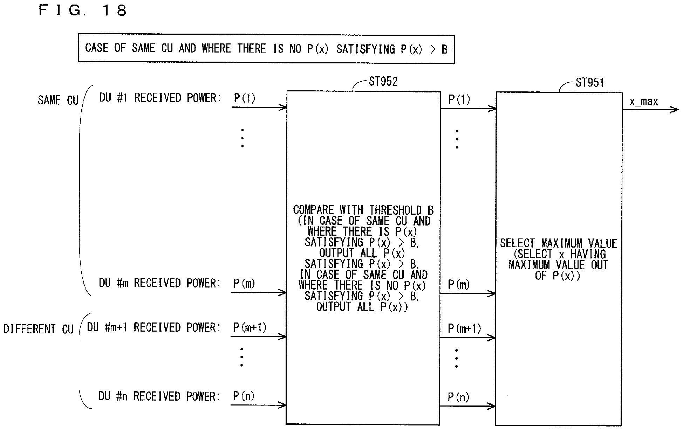

FIG. 17 and FIG. 18 are each a block diagram illustrating an example of processing preferentially selecting the DU under the same CU over the DU under a different CU by using the threshold B described above. The processing of the block diagram is applied to Step ST603 of SELECT BEST CELL in the flowchart of cell search described with reference to FIG. 12 in the above.

The following assumes a case in which the UE has measured received powers from DU #1 to DU #m under the same CU and DU #m+1 to DU #n under a different CU, and each of those received powers is P(x). Here, x is a number of the DU, and is an integer that satisfies 1 ≤ x ≤ n.

In block ST952, processing of comparing with the threshold B is performed on these received powers P(x). Note that the received powers P(1) to P(m) of the DUs under the same CU are compared with the threshold B, whereas the received powers P(m+1) to P(n) of the DUs under a different CU are not compared with the threshold B. As a result of the comparison, if x that satisfies the relationship of P(x) > B is 1 to j, as illustrated in FIG. 17, only P(1) to P(j) are output from block ST952. If there is no x that satisfies the relationship of P(x) > B, as illustrated in FIG. 18, P(1) to P(n) are output from block ST952.

In block ST951, processing of selecting a maximum value is performed on P(x) obtained by the comparison processing with the threshold B. Specifically, x having a maximum value of P(x) out of the input values P(x) to block ST951 is selected. Selected x is used as a processing result x_max of maximum value selection.

The DU represented by the processing result x_max of maximum value selection is determined as the cell reselection target.

As a means in which the UE determines the threshold B, a means similar to the means in which the UE determines the offset value A in the first embodiment may be applied. With this, for example, effects similar to the effects described in the first embodiment can be obtained.

According to the second embodiment, effects similar to the effects of the first embodiment can be obtained. Further, by performing cell reselection from the DU under the same CU having reception strength greater than the threshold B, for example, the UE can promptly execute cell reselection with a reduced processing amount.

The first and second embodiments may be combined. For example, in the maximum value selection processing for P(x) obtained through the comparison processing with the threshold B, the offset value A may be added to the received power of the DU under the same CU. For example, this allows the DU under the same CU to be more easily selected as the cell reselection target even when the received power of all of the DUs under the same CU is below the threshold B. Therefore, the probability of occurrence of signaling between the base stations in cell reselection can be reduced. As a result, in NR, radio communication with low delay can be performed.

Here, according to the second embodiment, for example, a configuration as below is provided.

A communication terminal device configured to perform radio communication with a plurality of base stations is provided. Further, a communication system including such a communication terminal device and a plurality of base stations is provided.

Specifically, each of the plurality of base stations includes a plurality of DUs configured to perform radio communication with the communication terminal device, and a CU configured to control the plurality of DUs. When the communication terminal device selects a connection target DU, the communication terminal device preferentially selects the DU belonging to an immediately preceding CU (the CU to which the DU that has been connected in an immediately preceding case belongs) over the DU belonging to another CU.

The communication terminal device and the communication system described above may have a more specific configuration as below, for example. Specifically, when the communication terminal device selects the connection target DU, the communication terminal device performs received power comparison processing of comparing received power values from neighboring DUs. The received power comparison processing includes selection processing.

The selection processing is processing of selecting all of the received power values satisfying a predetermined condition out of the received power values from the neighboring DUs, and when none of the received power values from the neighboring DUs satisfies the predetermined condition, selecting all of the received power values from the neighboring DUs.

The predetermined condition includes a condition that the received power value is a received power value from the neighboring DU belonging to the immediately preceding CU, and a condition that the received power value is a predetermined threshold or greater. The communication terminal device compares the received power values after the selection processing in the received power comparison processing.

As described above, the first and second embodiments may be combined. For example, the received power comparison processing may include the offset processing described in the first embodiment, in addition to the selection processing.

The configurations described above can be modified in various forms, based on disclosure and implication of this specification including the second embodiment. According to the configurations described above and modifications of the configurations, the problem described above can be solved, with the result that the effects described above can be obtained.

### Third Embodiment

The first and second embodiments describe a means of preferentially selecting the DU under the same CU over the DU under a different CU when cell reselection is performed in the system of the CU-DU split configuration. The third embodiment will describe a means of preferentially selecting a cell in the same RAN-based notification area (RNA (see Non-Patent Document 16)) over a cell in a different RNA, not only in the system of the CU-DU split configuration.

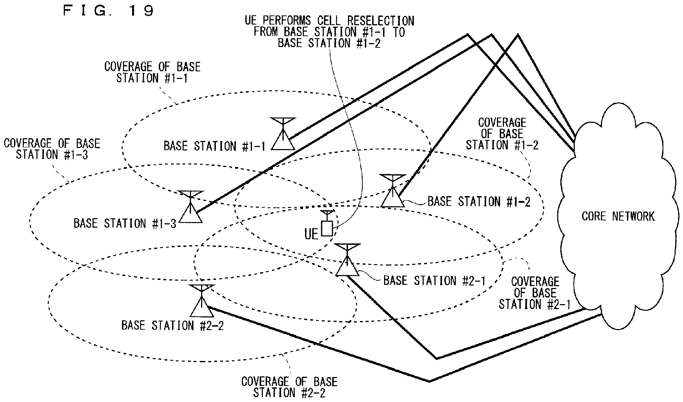

FIG. 19 is a diagram illustrating an example of operation in which the UE performs cell reselection between the base stations in the RNAs.

According to the example of FIG. 19, base station #1-1, base station #1-2, and base station #1-3 belong to RNA #1. Base station #2-1 and base station #2-2 belong to RNA #2. The UE is in the state of RRC _INACTIVE after being connected to base station #1-1, and subsequently intends to be restored to the state of RRC _CONNECTED by performing cell reselection. The position of the UE in this case is located outside the coverage of base station #1-1, and is located inside the coverage of base station #1-2 and inside the coverage of base station #2-1.

Under such circumstances, if the LTE selects base station #1-2 as the connection target, the connection target remains being RNA #1 and there is no change, and thus update of position registration information is unnecessary after cell reselection.

However, if the UE selects base station #2-1 as the connection target, the connection target is changed from RNA #1 to RNA #2, and thus update of the position registration information is necessary after cell reselection. Due to such update processing, a delay is caused. Further, a sequence of position registration information update is executed between the UE and the base station, and radio resources and network resources are consumed.

A solution to the problem described above is disclosed below.

When the UE performs cell reselection, the UE determines to which RNA each neighboring base station belongs, and preferentially selects the base station in the RNA that is the same as the RNA to which the UE has been connected in the immediately preceding case over the base station in the RNA that is different from the RNA to which the UE has been connected in the immediately preceding case.

As a means in which the UE determines to which RNA each neighboring base station belongs and a means in which the UE preferentially selects the base station in the same RNA over the base station in a different RNA when the UE performs cell reselection, the means according to the first and second embodiments can be applied. Specifically, the CU in the first and second embodiments only needs to be replaced with the RNA, and the DU in the first and second embodiments only needs to be replaced with the base station.

In the means in which the UE preferentially selects the base station in the same RNA over the base station in a different RNA when the LTE performs cell reselection in the third embodiment, a value (which may be hereinafter referred to as an offset value C) that is similar to the offset value A disclosed in the first embodiment may be used, a value (which may be hereinafter referred to as a threshold D) that is similar to the threshold B disclosed in the second embodiment may be used, or a combination of the offset value C and the threshold D may be used.

As a means in which the UE determines the offset value C, a means similar to the means in which the UE determines the offset value A in the first embodiment may be applied. With this, for example, effects similar to the effects described in the first embodiment can be obtained. The same may hold true for the means in which the UE determines the threshold D.

In the third embodiment, the offset value C may be applied only when the UE is in the RRC_INACTIVE state. The same may hold true for application of the threshold D. With this, for example, when the UE is in the RRC_INACTIVE state, update of the position registration information can be made unnecessary by preferentially selecting the base station in the same RNA, whereas when the UE is in the RRC_IDLE state, a cell having satisfactory quality can be selected regardless of the same RNA or a different RNA. As a result, communication quality of the UE can be enhanced.

According to the third embodiment, when the UE performs cell reselection, there is a higher probability that the UE selects the base station in the RNA that is the same as the RNA to which the UE has been connected in the immediately preceding case. Accordingly, update of the position registration information after cell reselection is made unnecessary. As a result, in NR, radio communication with low delay can be performed. Further, radio resources and network resources between the UE, the base station, and the core network can be saved.

Here, according to the third embodiment, for example, a configuration as below is provided.

A communication terminal device configured to perform radio communication with a plurality of base stations is provided. Further, a communication system including such a communication terminal device and a plurality of base stations is provided.

More specifically, when the communication terminal device selects a connection target base station, the communication terminal device preferentially selects the base station belonging to an immediately preceding RNA (the RNA to which the base station that has been connected in an immediately preceding case belongs) over the base station belonging to another RNA.

The configuration described above can be modified in various forms, based on disclosure and implication of this specification including the third embodiment. According to the configuration described above and modifications of the configuration, the problem described above can be solved, with the result that the effects described above can be obtained.

The embodiments and the modifications are mere exemplifications of the present invention, and can be freely combined within the scope of the present invention. The arbitrary constituent elements of the embodiments and the modifications can be appropriately modified or omitted.

A subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

While the invention is described in detail, the foregoing description is in all aspects illustrative and does not restrict the present invention. Therefore, numerous modifications and variations that have not yet been exemplified are devised without departing from the scope of the present invention.

Further preferred aspects of the present disclosure may be summarized as follows:
Aspect 1. A communication system comprising:
   - a plurality of base stations; and
   - a communication terminal device configured to perform radio communication with the plurality of base stations,
   wherein each of the plurality of base stations includes
   - a plurality of distributed units (DUs) configured to perform radio communication with the communication terminal device, and
   - a central unit (CU) configured to control the plurality of DUs, and
   - when the communication terminal device selects a connection target DU, the communication terminal device preferentially selects one of the plurality of DUs belonging to an immediately preceding CU being the CU to which another of the plurality of DUs having been connected in an immediately preceding case belongs over yet another of the plurality of DUs belonging to another CU.
Aspect 2. The communication system according to aspect 1,
   wherein when the communication terminal device selects the connection target DU, the communication terminal device performs received power comparison processing of comparing received power values from neighboring DUs,
   the received power comparison processing includes offset processing of adding an offset value to one of the received power values of one of the neighboring DUs belonging to the immediately preceding CU and not adding the offset value to another of the received power values of another of the neighboring DUs belonging to the another CU, and
   the communication terminal device compares the received power values after the offset processing in the received power comparison processing.
Aspect 3. The communication system according to aspect 1 or 2,
   wherein when the communication terminal device selects the connection target DU, the communication terminal device performs received power comparison processing of comparing received power values from neighboring DUs, the received power comparison processing includes selection processing of selecting all of the received power values satisfying a predetermined condition out of the received power values from the neighboring DUs, and when none of the received power values from the neighboring DUs satisfies the predetermined condition, selecting all of the received power values from the neighboring DUs, the predetermined condition includes
   a condition that one of the received power values is a received power value from one of the neighboring DUs belonging to the immediately preceding CU, and a condition that one of the received power values is a predetermined threshold or greater, and
   the communication terminal device compares the received power values after the selection processing in the received power comparison processing.
Aspect 4. A communication system comprising:
   - a plurality of base stations; and
   - a communication terminal device configured to perform radio communication with the plurality of base stations,
   wherein when the communication terminal device selects a connection target base station, the communication terminal device preferentially selects one of the plurality of base stations belonging to an immediately preceding RAN-based notification area (RNA) being the RNA to which another of the plurality of base stations having been connected in an immediately preceding case belongs over yet another of the plurality of base stations belonging to another RNA.
Aspect 5. A communication terminal device configured to perform radio communication with a plurality of base stations,
   wherein each of the plurality of base stations includes
   - a plurality of distributed units (DUs) configured to perform radio communication with the communication terminal device, and
   - a central unit (CU) configured to control the plurality of DUs, and
   - when the communication terminal device selects a connection target DU, the communication terminal device preferentially selects one of the plurality of DUs belonging to an immediately preceding CU being the CU to which another of the plurality of DUs having been connected in an immediately preceding case belongs over yet another of the plurality of DUs belonging to another CU.
Aspect 6. A communication terminal device configured to perform radio communication with a plurality of base stations,
   wherein when the communication terminal device selects a connection target base station, the communication terminal device preferentially selects one of the plurality of base stations belonging to an immediately preceding RAN-based notification area (RNA) being the RNA to which another of the plurality of base stations having been connected in an immediately preceding case belongs over yet another of the plurality of base stations belonging to another RNA.

### Explanation of Reference Signs

- 200: communication system
- 202: communication terminal device
- 203: base station device

## Claims

1. A communication terminal apparatus (202) communicating with a base station apparatus (203), the communication terminal apparatus (202) configured to:
receive a threshold transmitted from the base station apparatus (203) via a RRC connection release message;
measure Reference Signal Received Powers (RSRPs) for one or more neighbouring cells; and
perform cell reselection based on the measured RSRPs and the threshold.

2. The communication terminal apparatus (202) as recited in Claim 1,
wherein the base station apparatus (203) consists of a central unit (CU) and distributed units (DUs), and
the RSRPs for the neighbouring cells are RSRPs for the DUs.

3. The communication terminal apparatus (202) as recited in Claim 2,
wherein the communication terminal apparatus (202) is further configured to perform the cell reselection when connecting from a first DU to a second DU, the first DU and the second DU are within a same CU.

4. The communication terminal apparatus (202) as recited in Claim 1,
wherein the communication terminal apparatus (202) is further configured to perform the cell reselection based on priorities.

5. The communication terminal apparatus (202) as recited in Claim 4,
wherein the priorities are set between different RATs.

6. The communication terminal apparatus (202) as recited in Claim 4,
wherein the priorities are set between different CUs.

7. The communication terminal apparatus (202) as recited in Claim 4,
wherein the communication terminal apparatus (202) is further configured to:
if equal priorities are set,
measure the RSRPs for the one or more neighbouring cells; and
perform the cell reselection based on the measured RSRPs and the threshold.

8. The communication terminal apparatus (202) as recited in Claim 1,
wherein the communication terminal apparatus (202) is further configured to: receive an offset value transmitted from the base station apparatus (203); and perform the cell reselection based on the offset value.

9. The communication terminal apparatus (202) as recited in Claim 1,
wherein the communication terminal apparatus (202) is further configured to perform the cell reselection when in RRC _INACTIVE or RRC_IDLE.

10. The communication terminal apparatus (202) as recited in Claim 1,
wherein the communication terminal apparatus (202) is further configured to receive the threshold transmitted from the base station apparatus (203) via a dedicated signaling.

11. The communication terminal apparatus (202) as recited in Claim 8,
wherein the communication terminal apparatus (202) is further configured to receive the offset value transmitted from the base station apparatus (203) using a broadcast channel.

12. The communication terminal apparatus (202) as recited in Claim 1,
wherein the communication terminal apparatus (202) is further configured to receive a cell ID transmitted from the base station apparatus (203) using a broadcast channel.

13. The communication terminal apparatus (202) as recited in Claim 12,
wherein the cell ID uniquely identifies a cell in a system.

14. A base station apparatus (203) communicating with a communication terminal apparatus (202), the base station apparatus (203) configured to transmit a threshold to the communication terminal apparatus (202) via a RRC connection release message,
the threshold is used by the communication terminal apparatus (202) to perform cell reselection, and the cell reselection is performed based on Reference Signal Received Powers (RSRPs) for one or more neighbouring cells and the threshold.

15. A communication system (200) comprising a base station apparatus (203) and a communication terminal apparatus (202),
the base station apparatus (203) configured to transmit a threshold to the communication terminal via a RRC connection release message, and
the communication terminal apparatus (202) configured to:
receive the threshold transmitted from the base station apparatus (203); measure Reference Signal Received Powers (RSRPs) for one or more neighbouring cells; and
perform cell reselection based on the measured RSRPs and the threshold.
